# EUROPEAN PATENT SPECIFICATION

(11) **EP 0 410 062 B1**
(45) Date of publication and mention of the grant of the patent: **28.08.1996**
(21) Application number: 89480104.2
(22) Date of filing: 29.06.1989
(51) Int. Cl.: G06F 17/24

(54) **Dynamic selection of logical element data format**
Dynamische Selektion eines logischen Elementdatenformats
Sélection dynamique d'un format de données pour des éléments logiques

(30) Priority: 22.07.1988 US 223131
(43) Date of publication of application: 30.01.1991
(73) Proprietor: International Business Machines Corporation, Armonk, N.Y. 10504 (US)
(72) Inventor: Barker, Barbara Ann, Round Rock Texas 78681 (US); Edel, Thomas R., Round Rock Texas 78750 (US); Stark, Jeffrey A., Grapevine Texas 76051 (US)
(74) Representative: de Pena, Alain

(56) References cited:
- GB-A- 1 363 910
- IBM TECHNICAL DISCLOSURE BULLETIN. vol. 30, no. 11, April 1988, ARMONK, NY, US pages 8 - 10; 'Method to provide new function for the automatic sequencing of text'
- COMMUNICATIONS OF THE ASSOCIATION FOR COMPUTING MACHINERY. vol. 30, no. 11, November 1987, NEW YORK, NY, US pages 933 - 947; J.H. COOMBS, A.H. RENEAR, AND S.J. DEROSE: 'Markup systems and the future of scholarly text processing'
- IBM TECHNICAL DISCLOSURE BULLETIN. vol. 28, no. 2, July 1985, ARMONK, NY, US page 844; 'Optional move/copy of text attributes'
- COMMUNICATIONS OF THE ASSOCIATION FOR COMPUTING MACHINERY. vol. 28, no. 9, September 1985, NEW YORK US pages 942 - 960; J. GUTKNECHT: 'Concepts of the text editor LARA'

## Description

### BACKGROUND OF THE INVENTION

### Field of the Invention

The present invention generally relates to document control architectures for use in data processing systems and, more particularly, to a technique for the dynamic selection of logical element data format based on logical element characteristics that are established as a document is created or modified.

### Description of the Prior Art

When editing a document, changes in logical element relationships do not dynamically result in changes to the format of the data portion of a logical element. For example, an author may indent the first paragraph of each section of a document and block subsequent paragraphs in the document. When the first paragraph of a section is moved using existing state of the art editors, paragraph reformatting must be explicitly specified by the user if the movement results in a change of paragraph order within sections. New first paragraphs that were originally blocked must now be indented by entering indent commands or by linking the paragraph to a style sheet that specifies indented paragraph style. Similarly, indented paragraphs that are no longer first paragraphs must now be blocked by entering commands that cancel the indenting or by linking the paragraph to a style sheet that specifies blocked paragraph style.

A specific example in the so-called desktop publishing field is Xerox's Ventura Publisher product. This product uses style sheets into which text, graphic, table and/or image data may be imported from other application programs such as word processors, spread sheets and the like. Some style sheets are included with the product, and the user may generate other style sheets either by modifying existing style sheets or inputting the specifications for style sheets from scratch.

Once text has been imported, chapter headings, subheadings, first paragraphs and other document elements can be tagged resulting in formatting of the data according to predefined characteristics. For example, the first paragraph of a chapter might be formatted blocked with the first letter of the first sentence being a 36 point type size of a particular font with the rest of text characters in 10 point size and flowing around the first letter.

However, in the course of editing the document, if the first paragraph is moved or changed, then the tags must be deleted and new tags applied to the new first paragraph.

In other words, the tags are attached to and go with the paragraph. The same is true of other document elements such as titles, headings and the like.

The following documents deal with text processing, but none of them disclose a method for solving the problem of making changes in logical element relationships which result dynamically in changes to the format of the data portion of any logical element.

GB-A-1 363 910 discloses a system where symbolic variables are used in a first text stream; the final text stream is reconstructed by processing of said first text stream by a text composition program. In the first text stream are imbedded certain usage identifiers C1, C2,...Cn, referring to locations in a look-up table. A second storage area is used in the table look-up operation to convert values from table into information for the next stream, while a third storage area allows to store "reference values" upon the appropriate command in the next stream.

This document merely deals with the rearrangement of items (Ex: figures) after insertion or deletion by an editor, from the point of view of coherence between cross-reference of left items at a minimum verification burden cost for the editor.

IBM Technical Disclosure Bulletin, Volume 30, Number 11, April 1988, pages 8 to 10 deals with the use of specific controls for the generation of text for a sequence of letters, numbers or other user defined sequences.

The article published in Communications of the Association for Computing Machinery, Volume 30, Number 11, November 1987, pages 933-947 "Mark-up systems and the future of scholary text processing" discloses mark-up practices but do not describes a technical solution to a specific problem.

IBM Technical Disclosures Bulletin, Volume 28, Number 2, July 1985, pages 844 "Optional Move/Copy of text attributes", discloses a method that permits the operator of an interactive text processing system to selectively move/copy text attributes.

### SUMMARY OF THE INVENTION

It is therefore an object of the present invention to provide a method by which the format of the data portion of a logical element can be dynamically modified as the data is created or edited.

According to the invention, a decision as to what data format will be used is based on logical element characteristics such as the parent of the logical element, for example section, and the sequence of the logical element among the other children of the parent, for example first or subsequent paragraph within a section.

More specifically the present invention is a method for inputting a document in a data processing system, and formatting said document for display to a user of said data processing system, comprising the steps of:
- allowing said user to input a data format shell for said document, comprising data format specification shell entry groups,
- allowing said user to input, for each of said data format specification shell entry groups, characteristics of logical elements comprising parenthood characteristics and data format style characteristics,
- allowing said user to input logical elements, and link said logical elements to said data format shell,
- allowing said user to input data elements for each of said logical elements, and automatically determining a data format display for said data elements, based upon said logical elements characteristics,
- allowing said user to move one of said logical elements while editing said documents, and
- dynamically adapting the data format display of said one logical element as a part of said moving step.

### BRIEF DESCRIPTION OF THE DRAWINGS

The foregoing and other objects, aspects and advantages of the invention will be better understood from the following detailed description of a preferred embodiment of the invention with reference to the drawings, in which:
Figure 1 is an illustration of a computer screen illustrating the creation of a data format specification;
Figure 2 is an illustration of a computer screen illustrating the specification by the operator of data format values;
Figure 3 is an illustration of a computer screen illustrating the connection of a logical element to a format;
Figure 4 is an illustration of a computer screen further illustrating the connection of a logical element to a format;
Figure 5 is an illustration of a computer screen illustrating the movement of a logical element to a new position;
Figure 6 is a flow chart showing the logic of the process that builds a data format specification according to the invention; and
Figure 7 is a flow chart showing the logic of the process that dynamically selects a logical element format according to the invention.

### DETAILED DESCRIPTION OF A PREFERRED EMBODIMENT OF THE INVENTION

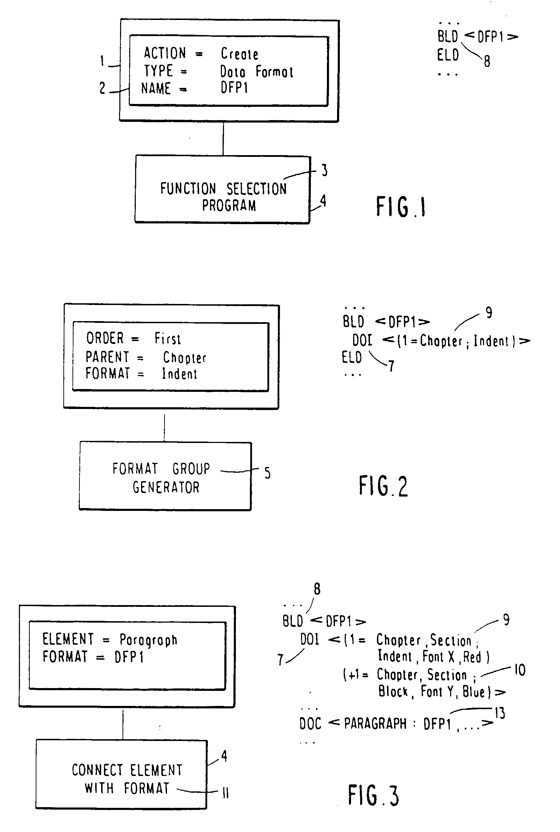

Referring now to the drawings, and more particularly to Figure 1, there is illustrated a screen 1 on which is displayed a data format creation menu 2. The menu is presented by application 3 that is running on device 4, such as a computer terminal or workstation, and which has been initiated by an operator of device 4. The application allows for the definition of a data format shell. In Figure 1, the operator has entered "Create" after the "ACTION=" prompt, "Data Format" after the "TYPE=" prompt, and "DFP1" after the "NAME=" prompt. Therefore, application 3 starts a shell for a data format specification by automatically generating a Begin/End (BLD/ELD in Figure 1) for data format specification shell 8 and displaying prompts on screen 1 whose answers will be used to complete the data format specification. The name entered by the operator, "DFP1", is automatically assigned as the name of the data format specification by application 3.

Figure 2 shows the prompts that are used to get information from the operator to fill in data format specification shell "DFP1". In response to the prompt "ORDER=", the operator selects "First". Other options such as second, subsequent, all, last, etc. are also available to the operator. Any known selection process will suffice. For purposes of this disclosure it is assumed that the cursor can be placed on the response area and a function key can be used to cycle through the available choices. When the desired choice appears, the operator selects it by depressing a designated key on the keyboard such as the ENTER key.

Application 5 builds a data format specification shell entry group (DOI in Figure 2), and first entry 9 is created within group 7. Application 5 adds the argument "1" to entry 9 to specify that data for the first offspring of the designated parents, for example the first paragraph of a section, is to be formatted as specified by entry 9. In response to the prompt "PARENT=", the operator selects "Chapter" thereby declaring the parent for entry 9 to be a logical element named chapter. Other logical elements such as section, paragraph, prologue, index, table of contents, abstract, etc. are also available to the operator. Application 5 adds the argument chapter to entry 9 to specify that chapter is a parent logical element for the data format specified in entry 9. In response to the prompt "FORMAT=", the operator selects "Indent" thereby declaring the format of the data for the first offspring of a chapter is to be in an indented style. Application 5 adds the argument indent to entry 9. The sequence of prompts and responses is repeated as many times as needed to complete group 7.

In Figure 3, group 7 has two entries 9 and 10 and each entry has several arguments for parent and data format style. Figure 3 shows the prompts that are used to get information from the operator to connect logical element description 13 to data format specification shell 8. In response to the prompt "ELEMENT=", the operator selects "Paragraph". In response to the prompt "FORMAT=", the operator selects "DFP1". Application 11 that is running on device 4 now connects logical element definition 13 to data format specification shell 8. When an instance of a paragraph is created, shell 8 will be used to direct the formatting of data for that paragraph.

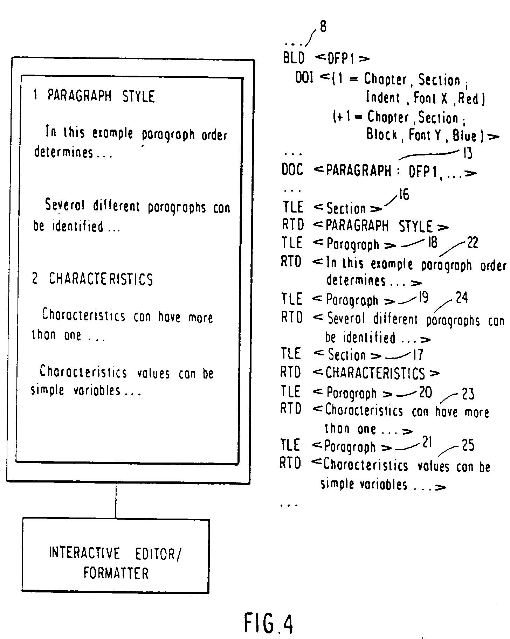

Figure 4 shows a document that contains paragraph definition 13 linked to data format specification shell 8 and two section instances 16 and 17 which between them have four paragraphs instances 18, 19, 20, and 21. Data elements 22 and 23 are formatted in an indent style because they belong to the first paragraph instance in a section, and shell 8 specifies indent style for first paragraph data. Data elements 24 and 25 are formatted in a block style because they belong to subsequent paragraphs in sections 16 and 17, respectively, and shell 8 specifies block style for subsequent (noted as +1 in Figure 4) paragraph data.

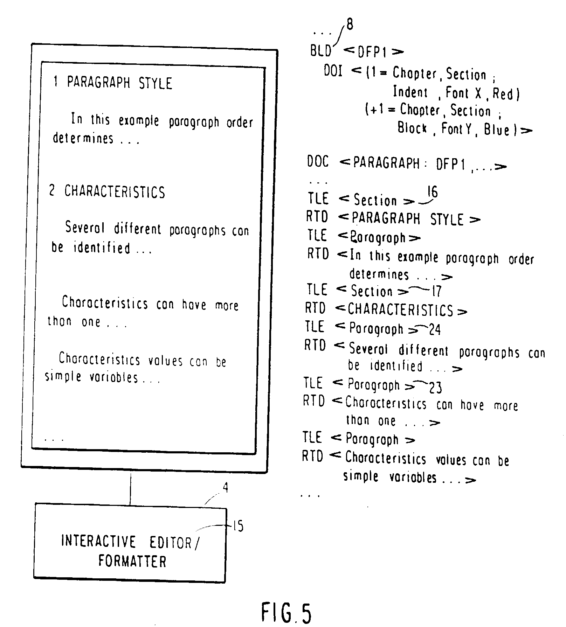

Figure 5 shows what happens automatically when an operator moves a paragraph. Using editor 15 running on device 4, the operator moves paragraph 24 from a subsequent position in section 16 (see Figure 4) to the first position in section 17. By following the rules in shell 8 for formatting of paragraph data, data for paragraph 24 is automatically restyled by application 15 from style: Block, Font Y, Blue to style: Indent, Font X, Red. Since the positioning of paragraph 23 is also changed from first to subsequent, its data is automatically restyled by application 15 according to shell 8 from style: Indent, Font X, Red to style: Block, Font Y, Blue.

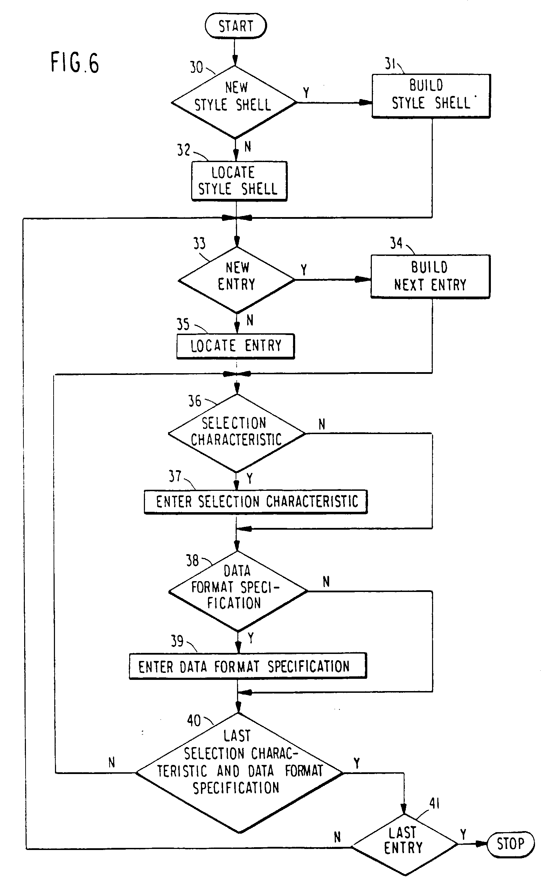

The logic of the process that builds a data format specification is shown in Figure 6. The process begins with decision block 30 where a test is made to determine if a new shell type has been detected. If so, the shell style is built in function block 31; otherwise, the old shell style is located in function block 32. In either case, control next goes to decision block 33 where a test is made to determine if a new entry has been detected. If so, the next entry is built in function block 34; otherwise, the old entry is located in function block 35. In either case, control next goes to decision block 36 where a test is made to determine if a selection characteristic has been input. If so, the selection characteristic is entered in function block 37 before control goes to decision block 38; otherwise, control goes directly to decision block 38. In decision block 38, a test is made to determine if a data format specification has been input. If so, the data format specification is entered in function block 39 before control goes to decision block 40; otherwise, control goes directly to decision block 40. In decision block 40, a test is made to determine if the last selection characteristic and data format specification has been entered. If not, the process loops back to decision block 36. If so, a test is next made in decision block 41 to determine if the last entry has been processed. If not, the process loops back to decision block 33. If so, the process ends.

The following pseudocode implements the logic shown in the flow chart of Figure 6. A programmer of ordinary skill in the art can write source code from the pseudocode in any desired computer language (e.g., Pascal, C, etc.) from which object code can be derived by a suitable compiler.

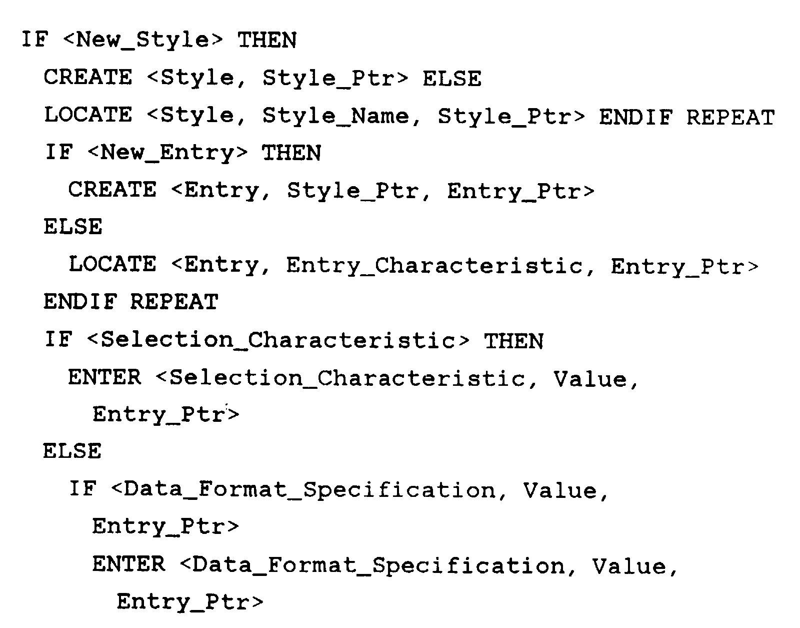

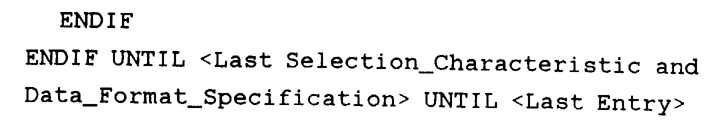

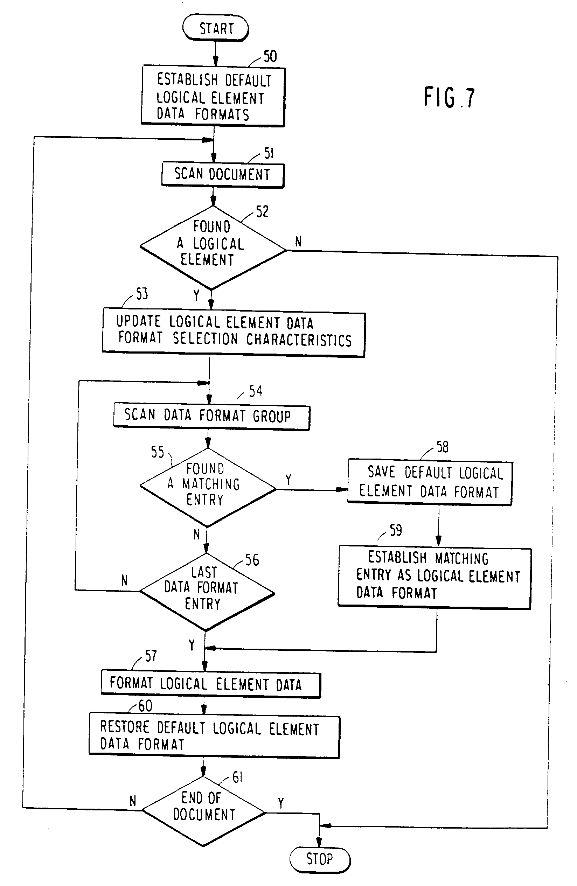

The logic of the process that dynamically selects a logical element format is illustrated in the flow chart shown in Figure 7. The process begins at function block 50 by establishing default logical element data formats. The document is scanned in function block 51 and a test is made in decision block 52 to determine if a logical element is found. If not, the process ends; otherwise, the logical element data format selection characteristics are updated in function block 53 before the data format group is scanned in function block 54. A test is next made in decision block 55 to determine if a matching entry is found and, if not, a test is made in decision block 56 to determine if this was the last data format entry. If not, control loops back to function block 54 to again scan the data format group. Otherwise, control goes to function block 57.

If a matching entry is found in decision block 55, then the default logical element data format is saved in function block 58, and the matching entry is established as the logical element data format in function block 59. At this point, control goes to function block 57 where the logical element data is formatted. Next, the default logical element data format is restored in function block 60. A test is then made in decision block 61 to determine if this is the end of the document. If it is, the process ends, but if it is not, then control loops back to function block 61 to scan the document.

The following pseudocode implements the logic shown in the block diagram shown in Figure 7. A programmer of ordinary skill in the art can write source code from the pseudocode in any desired computer language (e.g., Pascal, C, etc.) from which object code can be derived by a suitable compiler.

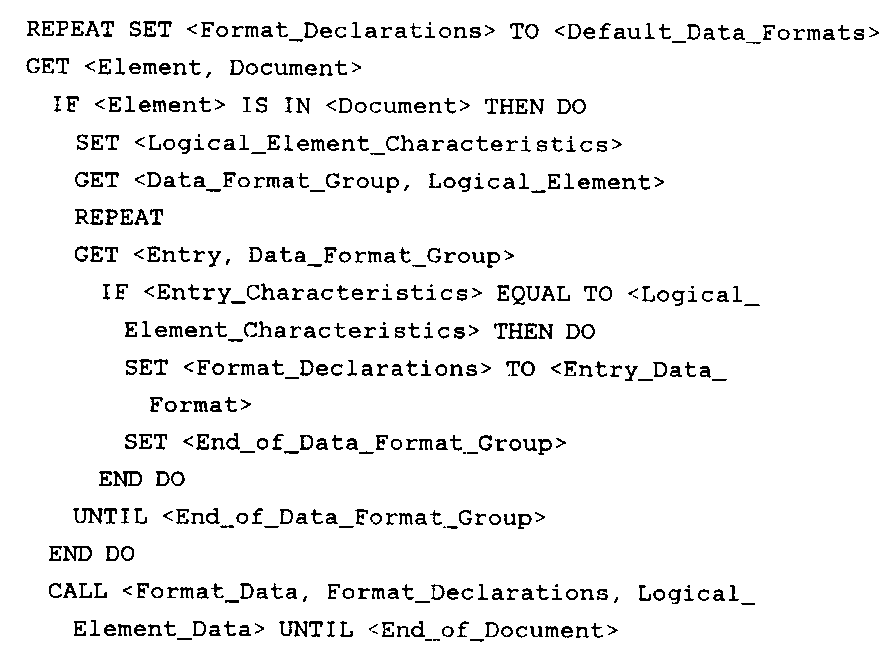

There are several advantages to the invention. First, dynamic data formatting conforms to changes in specified logical element characteristics as a document is edited. Second, consistent document appearance is maintained without time consuming visual checking and explicit modification. Third, there is better quality control over the visual results. Fourth, the time required to produce and image a consistently formatted document is reduced.

## Claims

1. A method for inputting a document in a data processing system, and formatting said document for display to a user of said data processing system characterized in that it comprises the following steps:
- allowing said user to input a data format shell (8) for said document, comprising data format specification shell entry groups (7),
- allowing said user to input, for each of said data format specification shell entry groups, characteristics of logical elements comprising parenthood characteristics and data format style characteristics (9, 10),
- allowing said user to input logical elements, and link said logical to said data format shell,
- allowing said user to input data elements (22, 23, 24, 25) for each of said logical elements, and automatically determining a data format display for said data elements, based upon said logical elements characteristics,
- allowing said user to move one of said logical elements while editing said document, and
- dynamically udapting the data format display of said one logical element as a part of said moving step.

## Patentansprüche

1. Eine Methode zur Eingabe eines Dokuments in ein Datenverarbeitungssystem und zum Formatieren des genannten Dokuments, um dieses einem Benutzer des genannten Datenverarbeitungssystems anzuzeigen, dadurch gekennzeichnet, daß sie die folgenden Schritte umfaßt:
- sie erlaubt es dem genannten Benutzer, eine Datenformatschale (8) für das genannte Dokument einzugeben, die Datenformatspezifikations-Schaleneintragsgruppen (7) umfaßt,
- sie erlaubt es dem genannten Benutzer, für jede der genannten Datenformatspezifikations-Schaleneintragsgruppen Merkmale logischer Elemente einzugeben, welche Ursprungsmerkmale und Datenformattypmerkmale enthalten (9, 10),
- sie erlaubt es dem genannten Benutzer, logische Elemente einzugeben, und die genannten logischen Elemente mit der genannten Datenformatschale zu verknüpfen,
- sie erlaubt es dem genannten Benutzer, Datenelemente (22, 23, 24, 25) für jedes der genannten logischen Elemente einzugeben und automatisch eine Datenformatanzeige für die genannten Datenelemente zu bestimmen, die auf den genannten logischen Elementmerkmalen basiert,
- sie erlaubt es dem genannten Benutzer, eines der genannten logischen Elemente beim Editieren des genannten Dokuments zu verschieben, und
- dynamisch die Datenformatanzeige des genannten einen logischen Elements als einen Teil des genannten Verschiebeschrittes zu aktualisieren.

## Revendications

1. Procédé de saisie d'un document dans un système de traitement de données et de formatage dudit document destiné à être affiché à un utilisateur dudit système de traitement de données, caractérisé en ce qu'il comprend les étapes suivantes :
- permettre audit utilisateur de saisir un interprétateur de format de données (8) pour ledit document, comprenant des groupes (7) de saisie d'interprétateur de spécification de format de données,
- permettre audit utilisateur de saisir, pour chacun desdits groupes de saisie d'interprétateur de spécification de format de données, des caractéristiques d'éléments logiques comprenant des caractéristiques de parenté et des caractéristiques de style de format de données (9, 10),
- permettre audit utilisateur de saisir des éléments logiques et de lier lesdits éléments logiques audit interprétateur de format de données,
- permettre audit utilisateur de saisir des éléments de données (22, 23, 24, 25) pour chacun desdits éléments logiques, et déterminer automatiquement un affichage de format de données pour lesdits éléments de données, sur la base desdites caractéristiques d'éléments logiques,
- permettre audit utilisateur de déplacer l'un desdits éléments logiques tout en effectuant l'édition dudit document, et
- mettre à jour de façon dynamique l'affichage du format de données dudit un élément logique en tant partie de ladite étape de déplacement.
